# EUROPÄISCHE PATENTSCHRIFT

(11) **EP 4 527 186 B1**
(45) Veröffentlichungstag und Bekanntmachung des Hinweises auf die Patenterteilung: **30.09.2026**
(21) Anmeldenummer: 24194046.9
(22) Anmeldetag: 12.08.2024
(51) Int. Cl.: A01D 78/10

(54) **HEUWERBUNGSMASCHINE, SOWIE VERFAHREN ZUM KOMPENSIEREN VON FERTIGUNGSTOLERANZEN FÜR EINE HEUWERBUNGSMASCHINE**
HAYMAKING MACHINE AND METHOD FOR COMPENSATING MANUFACTURING TOLERANCES FOR A HAYMAKING MACHINE
MACHINE DE FENAISON AINSI QUE PROCÉDÉ DE COMPENSATION DE TOLÉRANCES DE FABRICATION POUR UNE MACHINE DE FENAISON

(30) Priorität: 25.09.2023 DE 102023125883
(43) Veröffentlichungstag der Anmeldung: 26.03.2025
(73) Patentinhaber: Kverneland Group Kerteminde AS, 5300 Kerteminde (DK)
(72) Erfinder: Pauli, Marco, 78244 Gottmadingen (DE)
(74) Vertreter: Grünecker Patent- und Rechtsanwälte PartG mbB

(56) Entgegenhaltungen:
- EP-A1- 1 062 858
- EP-B1- 0 756 815
- EP-B1- 1 046 335
- EP-B1- 2 263 441
- DE-A1- 102018 213 212
- DE-A1- 19 543 429
- US-A1- 2022 330 484

## Beschreibung

Die Erfindung betrifft eine Heuwerbungsmaschine sowie ein Verfahren zum Kompensieren von Fertigungstoleranzen für eine Heuwerbungsmaschine.

Heuwerbungsmaschinen weisen mindestens einen Zinkenkreisel mit einem jeweiligen Rad auf, das den Zinkenkreisel über den Boden führt (DE 10 2018 213212 A1).

Die Höheneinstellung des Rads bei Heuwerbungsmaschine ist wichtig, um eine effiziente und qualitativ hochwertige Heuernte zu gewährleisten. Eine korrekte Höheneinstellung ist insbesondere im Hinblick auf eine Anpassung an Bodenverhältnisse wichtig. Je nach Bodenart und Beschaffenheit muss die Maschine höher oder niedriger eingestellt werden, um eine optimale Leistung zu erzielen. Die Höheneinstellung beeinflusst auch direkt die Qualität des geernteten Futters. Durch die präzise Einstellung kann sichergestellt werden, dass nur das gewünschte Gras geerntet wird, während beispielsweise unerwünschtes Unkraut und Bodenmaterial vermieden werden. Dies sind nur einige Beispiele. Insgesamt trägt die richtige Höheneinstellung der Räder dazu bei, die Effizienz, Qualität und Langlebigkeit von Heuwerbungsmaschinen zu verbessern und hilft dabei, bessere Ernteerträge und Futterqualität zu erzielen.

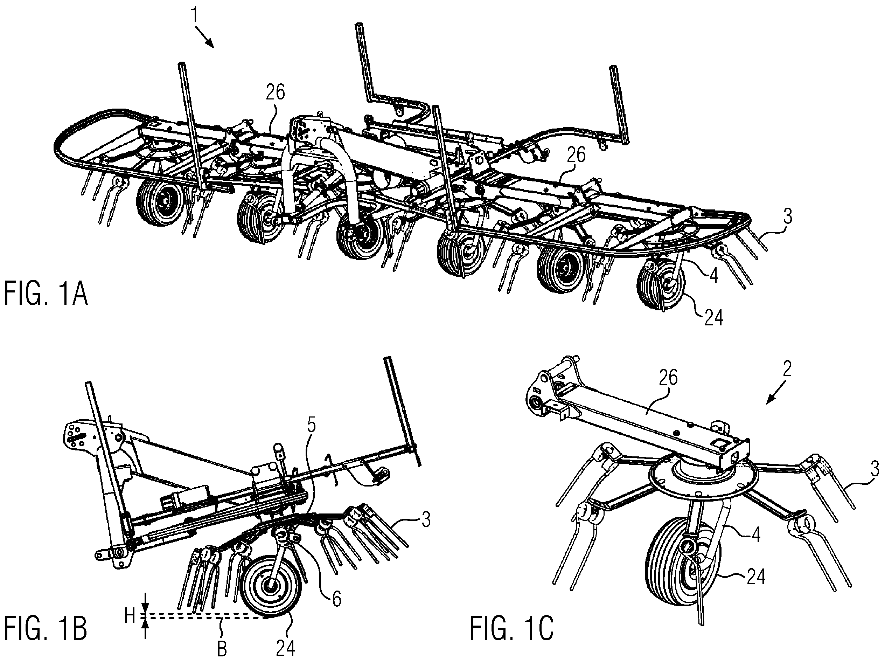

Aufgrund von Fertigungstoleranzen, bzw. Toleranzen beim Reifendurchmesser und bei der Zinkenlänge, kann es vorkommen, dass die Höhe "H", das bedeutet der kleinste Abstand der Zinken zum Boden nicht passend ist. Figur 1B zeigt beispielsweise den kleinsten Abstand "H" der Zinken vom Boden. Dies ist insbesondere dann problematisch, wenn die Heuwerbungsmaschine mehrerer Zinkenkreisel mit jeweiligen Rädern aufweisen. So kann es nämlich vorkommen, dass die Höhe "H" an jedem Kreisel unterschiedlich ist. Dies kann die Arbeitsqualität wesentlich beeinträchtigen. Für ein sauberes Rechenverhalten ist es wichtig, dass die Arbeitshöhe "H" bei allen Kreiseln bei einer vorbestimmten Neigung identisch ist.

Es ist bereits bekannt das Rad mittels Bolzen in der Höhe einzustellen um auf verschiedene Futterarten, bzw. Trocknungsgrade des Futters bzw. Bodenverhältnisse zu reagieren. Dabei kann das Rad an einem Arm, der ein Befestigungsmittel aufweist, an unterschiedlichen Positionen mittels Steckbolzen befestigt werden. Ein entsprechendes mechanisches Verstellen erlaubt allerdings nur eine grobe Einstellung. Eine Feineinstellung, insbesondere um Fertigungstoleranzen von mehreren Zinkenkreiseln auszugleichen ist damit nicht möglich.

Auch ist es bereits bekannt zusätzlich zu der bekannten Grobeinstellung noch eine Feineinstellung vorzunehmen. Allerdings muss hierzu die Befestigungseinrichtung zerlegt werden und die Einstellung kann nicht überwacht werden.

Hiervon ausgehend liegt der vorliegenden Erfindung die Aufgabe zugrunde, eine Heuwerbungsmaschine sowie ein Verfahren zum Kompensieren von Fertigungstoleranzen einer solchen Heuwerbungsmaschine bereitzustellen, die auf einfache und zuverlässige Art und Weise eine Feineinstellung erlaubt um Fertigungstoleranzen derart auszugleichen, dass ein korrekter Abstand der Zinken vom Boden eingestellt werden kann, insbesondere über die ganze Arbeitsbreite bei mehreren Zinkenkreiseln.

Erfindungsgemäß wird diese Aufgabe durch die Merkmale der Ansprüche 1 und 11 gelöst.

Gemäß der vorliegenden Erfindung umfasst eine Heuwerbungsmaschine mindestens einen Zinkenkreisel mit einem jeweiligen Rad, das an einem unteren Endbereich eines Arms angeordnet ist, wobei der obere Endbereich des Arms über eine Befestigungseinrichtung an einem in Bezug auf dem Boden höhenverstellbaren Halter befestigt ist und die Befestigungseinrichtung ein erstes Befestigungsmittel aufweist, das mit dem oberen Endbereich des Arms verbunden ist und an unterschiedlichen Positionen am Halter befestigbar ist, wodurch der Abstand des Halters zum Boden einstellbar ist. Das Befestigungsmittel ist insbesondere eine Befestigungsplatte.

Somit kann der Abstand der Zinken vom Boden durch den Abstand des Halters vom Boden diskret an bestimmte Positionen angepasst werden.

Erfindungsgemäß ist ein zweites Befestigungsmittel vorgesehen, das ebenfalls mit dem oberen Endbereich des Arms verbunden ist und das über eine Exzentereinrichtung derart an dem ersten Befestigungsmittel befestigt ist, dass in befestigten Zustand der beiden Befestigungsmittel durch Drehen der Exzentereinrichtung der Abstand des Halters zum Boden veränderbar ist. Durch Drehen des Exzenters verschieben sich das erste und zweite Befestigungsmittel relativ zueinander wodurch der obere Endbereich des Arms um seine Längsachse, d.h. eine Verstellachse gedreht und somit der Arm mit dem Rad je nach Drehrichtung nach oben oder unten verschwenkt wird. Das bedeutet, dass erfindungsgemäß zusätzlich zu der Grobeinstellung mittels dem ersten Befestigungsmittel eine Feineinstellung über das zweite Befestigungsmittel möglich ist. Dadurch, dass das erste und zweite Befestigungsmittel mittels Exzentereinrichtung miteinander verbunden sind, überlagern sich die Einstellungen.

Es ist besonders vorteilhaft, dass über die Exzentereinrichtung der Abstand des Halters zum Boden veränderbar ist, wenn das erste und zweite Befestigungsmittel miteinander verbunden sind und auch das erste Befestigungsmittel mit dem Träger verbunden ist, da dann eine Feineinstellung im montierten Zustand auf einfache Art und Weise vorgenommen werden kann, ohne dass die Befestigungseinrichtung demontiert werden muss. D.h., dass eine Feineinstellung unter Last möglich ist, wenn der Zinkenkreisel auf dem Rad auf dem Boden steht und dass die Feineinstellung überwacht werden kann.

Die Einstellung über das zweite Befestigungsmittel, d.h. die Feineinstellung zum Kompensieren von Fertigungstoleranzen kann z.B. beim Händler oder werksseitig einmalig erfolgen. Der Landwirt passt dann lediglich die Höhe des Trägers und somit die Zinkenhöhe über das erste Befestigungsmittel an.

Dabei erstreckt sich gemäß einer bevorzugten Ausführung Form eine Verstellachse durch das obere Ende des Arms. Das erste Befestigungsmittel ist derart an den unterschiedlichen Positionen am Halter befestigbar, dass der Drehwinkel des ersten Befestigungsmittels und dadurch der Drehwinkel des oberen Endbereichs des Arms um die Verstellachse A und somit der Abstand des Halters zum Boden veränderbar ist.

Das zweite Befestigungsmittel kann über die Exzentereinrichtung derart an dem ersten Befestigungsmittel befestigt sein, dass in befestigtem Zustand durch Drehen der Exzentereinrichtung der Anstellwinkel des ersten Befestigungsmittels zum zweiten Befestigungsmittel und dadurch der Drehwinkel des Arms um die Verstellachse A und somit der Abstand des Halters zum Boden veränderbar ist.

Es ist besonders vorteilhaft, dass durch Drehen der Exzentereinrichtung der Anstellwinkel des ersten Befestigungsmittels zum zweiten Befestigungsmittel kontinuierlich veränderbar ist. Somit ist eine exakte Einstellung und ein exakter Ausgleich von Fertigungstoleranzen möglich.

Gemäß einer bevorzugten Ausführungsform weist das erste Befestigungsmittel eine oder mehrere Öffnungen auf, wobei ein Stift, insbesondere ein Steckbolzen durch eine der Öffnung durchgreift, um das erste Befestigungsmittel an einer bestimmten Position am Halter, d.h. an einer von mehreren möglichen Positionen zu befestigen. Somit kann auf einfache Art und Weise der Landwirt durch das erste Befestigungsmittel die Höhe grobeinstellen und entsprechend ändern, insbesondere auch an bestimmte Gegebenheiten, zum Beispiel Trocknungsgrad des Futters oder Bodenbeschaffenheit anpassen.

Dabei weist vorteilhafterweise der Halter ebenfalls eine oder mehrere entsprechende Öffnungen auf, wobei der Steckbolzen durch eine Öffnung im ersten Befestigungsmittel und durch eine Öffnung im Halter durchgreift, wodurch das erste Befestigungsmittel an einer bestimmten Position befestigt wird. Der Steckbolzen kann beispielsweise an der Rückseite des Halters über eine Fixiereinrichtung, wie z.B. Kopf, Splint, Klappsplint befestigt und vor Herausrutschen gesichert werden. Es müssen insgesamt so viele Öffnungen im Träger und erstem Befestigungsmittel angeordnet sein, dass es unterschiedliche Befestigungspositionenoptionen gibt, also insgesamt mindestens drei.

Gemäß einer bevorzugten Ausführungsform weist das erste und zweite Befestigungsmittel sowie der Halter jeweils eine Durchgangsöffnung auf, durch die der obere Endbereich des Arms greift, wobei vorzugsweise das zweite Befestigungsmittel drehfest und unlösbar mit dem oberen Endbereich des Arms verbunden ist, insbesondere eingeschweißt ist. Dabei kann also das zweite Befestigungsmittel drehfest insbesondere verschweißt sein, während der obere Endbereich des Arms durch die Durchgangsöffnung des ersten Befestigungsmittels und die Durchgangsöffnung des Halters geschoben ist. Das erste Befestigungsmittel kann dann im montierten Zustand form- und und/oder kraftschlüssig drehfest mit dem Halter verbunden werden. Eine entsprechende Anordnung ist einfach zu montieren und ermöglicht auf einfache Art und Weise die zuvor beschriebene Grob- und Feineinstellung.

Vorteilhafterweise weist die Exzentereinrichtung ein von außen zugängliches Drehelement auf, über das mittels Werkzeug die Exzentereinrichtung verdrehbar ist. Somit kann auf einfache Art und Weise ohne Demontieren der Anordnung eine Feineinstellung vorgenommen werden. Dabei kann bei Drehen des Drehelements sofort erkannt werden, wann in die gewünschte Einstellung erreicht ist.

Vorteilhafterweise weist das erste und zweite Befestigungsmittel eine jeweilige Öffnung für die Exzentereinrichtung auf und einen Exzenterstift, insbesondere Schraube. Die Exzentereinrichtung weist vorteilhafterweise ein Grundelement mit einem Vorsprung auf, der in einer der Öffnungen für die Exzentereinrichtung im ersten oder zweiten Befestigungsmittel eingesetzt ist. In dem Grundelement und dem Vorsprung ist eine Exzenteröffnung angeordnet, durch die der Exzenterstift greift, wobei die Längsachse des Exzenterstifts bei der Drehung des Exzenters versetzt werden kann. Somit können das erste und zweite Befestigungsmittel auf einfache Art und Weise relativ zueinander versetzt werden und eine Drehung des oberen Endbereichs des Arms um die Verstellachse A bewirken.

Vorteilhafterweise sind das erste und zweite Befestigungsmittel parallel zueinander und jeweils in einer Ebene senkrecht zur Verstellachse A angeordnet.

Vorteilhafterweise ist das zweite Befestigungsmittel unlösbar mit dem oberen Endbereich des Arms verbunden, insbesondere angeschweißt.

Das erfindungsgemäße Verfahren gemäß Anspruch 11 dient zum Kompensieren von Fertigungstoleranzen, insbesondere für eine Heuwerbungsmaschine nach mindestens einem der Ansprüche 1-10, wobei die Heuwerbungsmaschine mindestens einen Zinkenkreisel mit einem jeweiligen Rad, das an einem unteren Endbereich eines Arms angeordnet ist aufweist und der obere Endbereich des Arms über eine Befestigungseinrichtung an einem in Bezug auf dem Boden höhenverstellbaren Halter befestigt ist. Das Verfahren weist folgende Schritte auf:
Grobeinstellung des Abstands des Halters vom Boden durch Befestigen eines ersten Befestigungsmittels, insbesondere einer Befestigungsplatte, die mit dem oberen Endbereich des Arms verbunden ist, an einer bestimmten Position am Halter, sowie

Feineinstellung mit Hilfe eines zweiten Befestigungsmittels, das mit dem oberen Endbereich des Arms verbunden ist und das über eine Exzentereinrichtung an dem ersten Befestigungsmittel befestigt ist, wobei durch Drehen der Exzentereinrichtung der Abstand des Halters zum Boden eingestellt wird.

Das erfindungsgemäße Verfahrenen bringt den Vorteil mit sich, dass die Fertigungstoleranzen kompensiert und die Höhe der Zinken fein eingestellt werden kann, während die Heuwerbungsmaschine bereits fertig montiert ist. Durch Drehen der Exzentereinrichtung kann sofort erkannt werden, wann die gewünschte Einstellung erreicht ist.

Vorteilhafterweise erstreckt sich eine Verstellachse durch das obere Ende des Arms. Es ist vorteilhaft, dass sich bei der Grobeinstellung in Abhängigkeit der Position, an der das erste Befestigungsmittel am Halter befestigt wurde, ein entsprechender Drehwinkel des ersten Befestigungsmittels und dadurch ein entsprechender Drehwinkel des Arms um die Verstellachse und somit der Abstand des Halters zum Boden einstellt. Bei der Feineinstellung kann durch Drehen der Exzentereinrichtung der Anstellwinkel des ersten Befestigungsmittels zum zweiten Befestigungsmittel, dadurch der Drehwinkel des oberen Endbereichs des Arms um die Verstellachse A und somit der Abstand des Halters zum Boden eingestellt werden.

Vorteilhafterweise weißt die Heuwerbungsmaschine mehrere Zinkenkreisel auf, wobei die Höhe der Halter der Zinkenkreisel aneinander durch Kompensieren der Fertigungstoleranzen durch die Feineinstellung angepasst wird, derart, dass die Zinken der Kreisel den gleichen Abstand vom Boden haben.

Vorteilhafterweise können die Fertigungstoleranzen kompensiert werden, während die Heuwerbungsmaschine auf ihren Rädern steht und das erste Befestigungsmittel am Halter befestigt ist und das erste mit dem zweiten Befestigungsmittel verbunden ist. Dies ermöglicht ein einfaches Einstellen auch bei großen Arbeitsbreiten bis zu 11 oder 15 Metern.

Die Feineinstellung, d. h., das Kompensieren von Fertigungstoleranzen kann beispielsweise beim Händler erfolgen. Der Landwirt kann dann nach dieser Feineinstellung den Abstand des Halters zum Boden durch eine weitere Grobeinstellung einstellen und an bestimmte Gegebenheiten, zum Beispiel Boden oder Futterart etc. einstellen.

Zur Feineinstellung kann die Exzentereinrichtung so lange kontinuierlich gedreht werden, bis der Halter und somit das Rad und die Zinken eine bestimmte relative Position zueinander aufweisen. Die vorliegende Erfindung wird nachfolgend unter Bezugnahme der folgenden Figuren näher erläutert.

Gemäß einer weiteren Ausführungsform ist vorgesehen, dass das zweite Befestigungsmittel zwei Flügel aufweist, die sich in Bezug auf die Verstellachse A in zwei Richtungen senkrecht nach außen erstrecken und in jedem Flügel eine Öffnung für die Exzentereinrichtung vorgesehen ist, insbesondere ein Langloch. Somit kann das zweite Befestigungsmittel von zwei Seiten her befestigt werden.
Figur 1A zeigt in perspektivischer Darstellung eine Heuwerbungsmaschine, hier beispielhaft einen Kreiselheuer gemäß einem Ausführungsbeispiel der vorliegenden Erfindung.
Figur 1B zeigt den in Figur 1A gezeigten Kreiselheuer in seitlicher Ansicht.
Figur 1C zeigt einen Ausschnitt eines Zinkenkreisels 2 des in Figur 1A und B gezeigten Kreiselheuers.
Figur 2A zeigt schematisch eine Explosionsdarstellung einer Befestigungseinrichtung für einen Apparat gemäß einem Ausführungsbeispiel der vorliegenden Erfindung.
Figur 2B zeigt die in Figur 2A gezeigte Anordnung ohne Rad.
Figur 3 zeigt schematisch eine Vorlageransicht, der in Figur 2 A gezeigten Befestigungseinrichtung.
Figur 4A zeigt schematisch eine Seitenansicht einer Befestigungseinrichtung für das Rad in einer ersten Einstellposition.
Figur 4B zeigt die Befestigungseinrichtung, in zwei Verstellpositionen gemäß einem weiteren Ausführungsbeispiel in zwei Verstellpositionen.

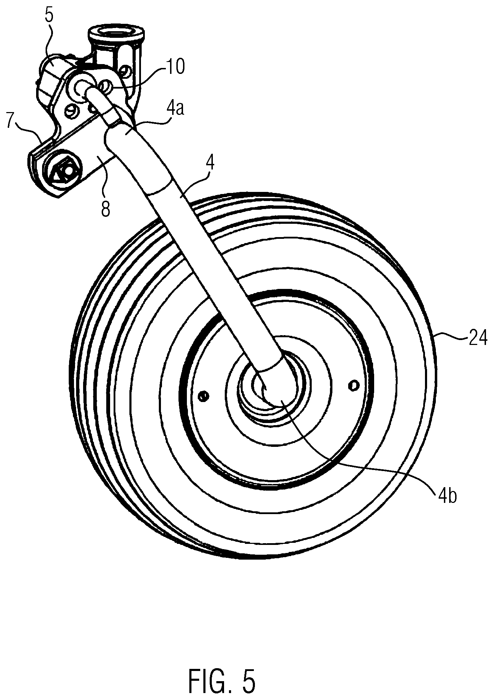

Figur 5 zeigt die in den Figuren 2-4A gezeigten Befestigungseinrichtungen in perspektivischer Darstellung.
Figur 6A zeigt in perspektivischer Darstellung eine Befestigungseinrichtung gemäß einem Ausführungsbeispiel der vorliegenden Erfindung.
Figur 6B zeigt die in Figur 6A gezeigte Befestigungseinrichtung von der Rückseite.
Figur 7 zeigt eine in Figur 6A und B gezeigte Befestigungseinrichtung mit ausgeblendeten Teilen des Exzenters.
Figur 8A zeigt eine Seitenansicht der Exzentereinrichtung.
Figur 8B zeigt eine Aufsicht auf die Innenseite der Exzentereinrichtung.
Figur 8C zeigt die Exzentereinrichtung in perspektivische Darstellung.
Figur 8D zeigt in perspektivische Darstellung die Außenseite der Exzentereinrichtung.
Figur 9A zeigt schematisch die Feineinstellung zwischen dem ersten und zweiten Befestigungsmittel in einer ersten Position gemäß einem weiteren Ausführungsbeispiel der vorliegenden Erfindung.
Figuren 9B und 9C zeigen die in Figur 9A gezeigten Befestigungsmittel in einer ersten und zweiten Position

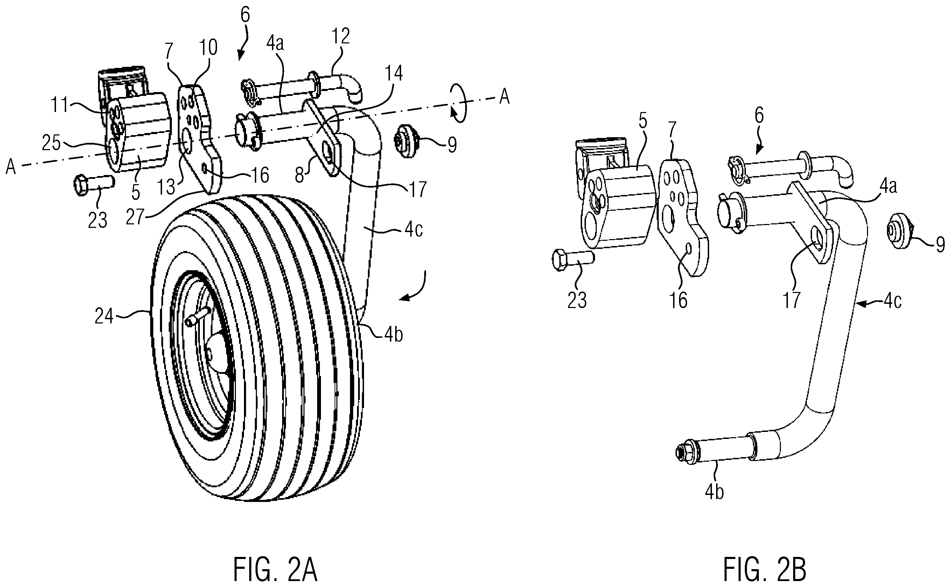

Figur 1A zeigt in perspektivischer Darstellung ein Ausführungsbeispiel gemäß der vorliegenden Erfindung anhand einer Heuwerbungsmaschine, insbesondere eines Kreiselheuers, der an einer Zugmaschine angehängt und z.B. über eine Welle antreibbar ist. Die Heuwerbungsmaschine weist hier links und rechts Ausleger 26 auf, an denen mehrere Zinkenkreisel 2 angeordnet sind. Die Zinkenkreisel weisen umlaufende Zinken 3 auf, deren Höhe H, wie in Figur 1B dargestellt ist u.a. durch die Neigung der Kreisel eingestellt ist. Figur 1B zeigt hier den Mindestabstand H. Jeder Zinkenkreisel 2 weist ein entsprechendes Rad 24 auf, mit dem die jeweiligen Zinkenkreisel über den Boden B geführt werden. Wie insbesondere aus den Figuren 1A bis 1C hervorgeht, ist eine Felge des Rads über den Arm 4 am jeweiligen Zinkenkreisel 2 befestigt. Dazu wird der Arm 4 über eine Befestigungseinrichtung 6 an einem Halter 5 höhenverstellbar in Bezug auf den Boden B befestigt, wie auch aus der Figur 2A und 2B hervorgeht. Der Arm weist einen oberen Endbereich 4a auf sowie einen unteren Endbereich 4b an dem das Rad 24 angeordnet ist und einen mittleren Bereich 4c. Der Arm 4 ist hier zum Beispiel im Wesentlichen U-förmige ausgebildet.

Figuren 2A und B zeigen die Befestigungseinrichtung 6 im Detail mit der der Arm 4 an dem Halter 5 befestigt ist, der wiederum mit dem entsprechenden Ausleger 26 (Fig.1) in Verbindung steht.

Dabei weist die Befestigungseinrichtung 6 ein erstes Befestigungsmittel 7 auf, hier in Form einer Befestigungsplatte mit mehreren Öffnungen, zum Beispiel zwei bis fünf Öffnungen um das erste Befestigungsmittel an unterschiedlichen Positionen am Halter 5 zu befestigen. Dabei weist an den entsprechenden Positionen der Halter 5 ebenfalls entsprechende Öffnungen 11 auf, derart, dass ein Stift, insbesondere ein Steckbolzen 12 durch die Öffnungen 10 und 11 geschoben werden kann, um das Befestigungsmittel am Halter 5 zu befestigen. An der Rückseite des Halters 5 kann der Stift 12 verriegelt werden, insbesondere durch Splint, Klappsplint. Das erste Befestigungsmittel 7, hier die Platte 7, als auch der Träger 5 weisen eine entsprechende Durchgangsöffnung 13, 25 für den oberen Endbereich des Arms 4a auf, über die sie mit dem Arm 4 im eingebauten Zustand kraft- und/oder formschlüssig verbunden sind. Dabei kann der obere Endbereich des Arms 4a an der Rückseite des Halters 5 insbesondere mittels Splint, Klappsplint fixiert werden.

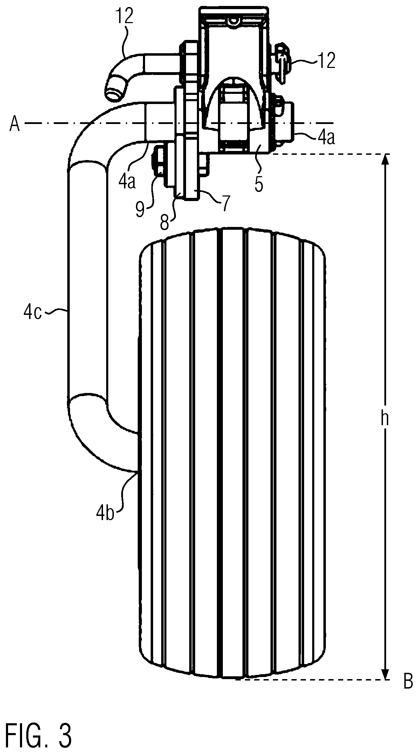

In der Explosionszeichnung in Fig.2A, 2B ist an den jeweils linken Endbereichen des Steckbolzens 12 bzw. des Arms 4a eine Einrichtung zum axialen Sichern, hier mit einer Scheibe und z.B. Splint. Diese Einrichtung wird von der Rückseite des Trägers auf den Arm 4a bzw. den Steckbolzen aufgebracht (siehe auch Fig.3).

Die Befestigungseinrichtung 6 weist ein zweites Befestigungsmittel 8 auf, das hier ebenfalls plattenartig ausgebildet ist und durch dessen Durchgangsöffnung 14 sich der obere Endbereich des Arms 4a erstreckt, wobei hier das zweite Befestigungsmittel 8 drehfest am Arm angeschweißt ist. Das zweite Befestigungsmittel ist über eine Exzentereinrichtung 9 an dem ersten Befestigungsmittel befestigt, wie besonderer aus der Figur 3 hervorgeht.

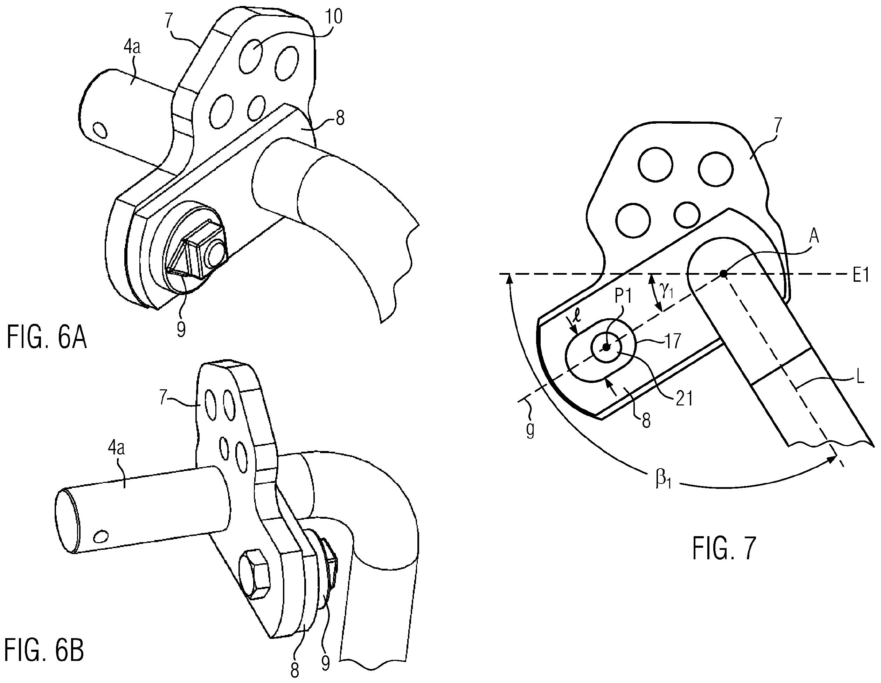

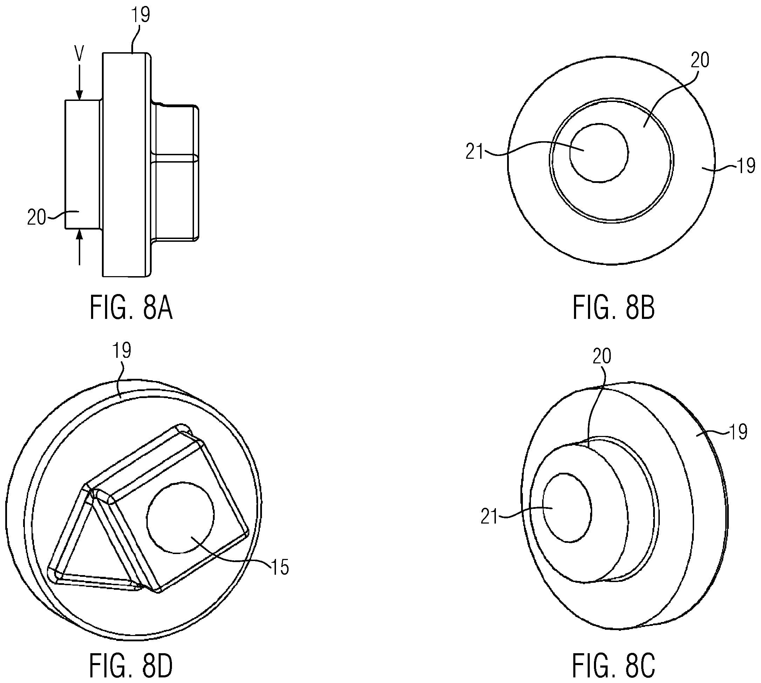

Dazu sind, wie aus Figuren 2A und 2B hervorgeht, im ersten und zweiten Befestigungsmittel 7, 8 jeweilige Öffnungen 16, 17 für die Exzentereinrichtung 9 vorgesehen. In diesem Ausführungsbeispiel ist die Exzenteröffnung 17 im zweiten Befestigungsmittel 8 als Langloch ausgebildet, wie zum Beispiel auch aus Figur 7A hervorgeht. Figuren 8A bis 8D zeigen eine mögliche Ausführungsform der Exzentereinrichtung 9. Dabei weist die Exzentereinrichtung 9 ein Grundelement 19, z.B. mit kreisförmigem Umfang auf, so wie einen Vorsprung 20, der ebenfalls z.B. einen kreisförmigen Umfang aufweist, der einen kleineren Durchmesser aufweist als das Grundelement 19, und der in eine der Öffnungen für die Exzentereinrichtung 16, 17, hier in die Öffnung 17 im zweiten Befestigungsmittel 8 eingesetzt wird. Dazu entspricht der Durchmesser v des Vorsprungs (Fig. 8A) im Wesentlichen dem Innendurchmesser I des Langlochs (Fig. 7) .Wie insbesondere aus den Figuren 8B und 8C hervorgeht, weist die Exzentereinrichtung 9 eine exzentrische Öffnung 21 auf, durch die der Exzenterstift 23 bzw. Bolzen geführt wird. Figur 8D zeigt die nach außen gewandte Seite der Exzentereinrichtung 9 mit einem Drehelement 15, das beispielsweise über ein Werkzeug verdreht werden kann, derart, dass sich die relative Position der Exzenteröffnung 21 in dem Langloch 17 ändert, d. h., die Mittelachse des Exzenterstifts 23 entsprechend versetzt wird und sich das erste und zweite Befestigungsmittel 7,8 relativ zueinander bewegen, wie nachfolgend noch näher erläutert wird.

Wie aus Figur 3 und 4AB hervorgeht, sind das zweite und erste Befestigungsmittel 7, 8 parallel zueinander angeordnet und liegen im montierten Zustand aneinander an und sind senkrecht zu einer Verstellachse A ausgerichtet. Dabei ergibt sich ein Abstand h zwischen Boden B und dem unteren Ende des Halters 5. Über das erste Befestigungsmittel 7 kann der Abstand des Halters 5 zum Boden grob eingestellt werden und durch das zweite Befestigungsmittel 8 kann der Abstand des Halters 5 zum Boden B fein eingestellt werden, d. h., dass der Abstand der Zinken 3 zum Boden B über den Abstand des Halters 5 zum Boden einstellbar ist.

Das erste Befestigungsmittel 7 wird dabei so an einer gewünschten Position am Halter 5 befestigt, dass der Drehwinkel des ersten Befestigungsmittel 7 relativ zum Halter 5, d. h., der Drehwinkel des oberen Endbereichs des Arms 4a um die Verstellachse A und somit der Abstand des Halters 5 zum Boden veränderbar ist. Dreht sich nämlich der obere Endbereich des Arms 4 wie in Figur 2A gezeigt ist um die Achse A, dreht sich automatisch auch das Rad 24 am unteren Endabschnitt A entsprechend. Das heißt, wenn sich in Abhängigkeit der gewählten Position, d. h., der gewählten Öffnung 10 zum Beispiel in Fig. 2A der hebelartige Vorsprung 27 des ersten Befestigungsmittels nach unten und hinten (in die Bildebene hinein) bewegt, sich auch der obere Endbereich des Arms 4a entsprechend dem Pfeil um die Achse A dreht.

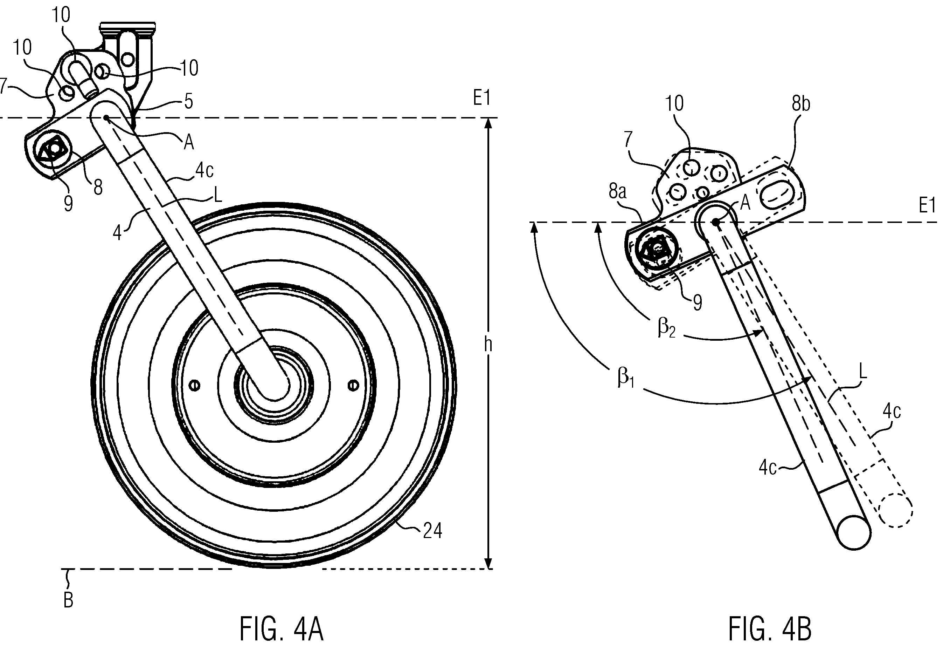

Entsprechendes geht insbesondere auch aus Figur 4A hervor. Figur 4A zeigt die Befestigung in einer der Öffnungen 10, hier in der mittleren Öffnung der drei Öffnungen 10. In dieser Position ergibt sich zur Grobeinstellung ein bestimmter Winkel β1 zwischen einer Ebene E1 in der die Achse A liegt, insbesondere einer horizontalen Ebene und der Längsachse L des Mittelbereichs des Arms 4c.Wird nun das erste Befestigungsmittel 7 an einer anderen Öffnung 10 befestigt, ändert sich entsprechend der Winkel βund somit die Höhe h, d. h., der Abstand des Halters 5 zum Boden. Wird beispielsweise nicht wie in Figur 4 A gezeigt, die mittlere Öffnung 10 zum Befestigen verwendet, sondern die in Figur 4A dargestellte linke untere Öffnung, so verkleinert sich der Winkel β zwischen der Achse L und der Ebene E1, sodass der Halter 5 in Bezug auf den Boden B weiter oben angeordnet ist, d. h. die Höhe h größer wird. Durch Wahl einer entsprechenden Öffnung, kann also eine Grobeinstellung der Höhe vorgenommen werden. Der Drehwinkel des ersten Befestigungsmittels 7 relativ zum Halter 5 und dadurch der Drehwinkel des oberen Endbereichs des Arms 4a um die Verstellachse A und somit der Winkel β1, β2 und schließlich der Abstand h des Halters 5 zum Boden ist somit grob einstellbar.

Dieses Prinzip wird nachfolgend nochmals unter Bezugnahme der Figur 4B erläutert. Das in Figur 4B gezeigte Ausführungsbeispiel entspricht dem vorherigen in den Figuren 1 - 4A gezeigten Ausführungsbeispielen, mit der Ausnahme, dass sich das zweite Befestigungsmittel 8 in Bezug auf die Verstellachse A seitlich in zwei Richtungen erstreckt und zwei entsprechende Flügel 8A, B aufweist. Dazu ist in beiden seitlichen Flügeln 8A, B jeweils eine Öffnung 17, insbesondere ein Langloch 17 vorgesehen, sodass, wenn beispielsweise das zweite Befestigungsmittel 8 an dem Arm 4 angeschweißt ist, das Befestigungsmittel von zwei Seiten aus, zum Beispiel von vorne und von hinten an einem ersten Befestigungsmittel 7 befestigt werden kann oder zum Beispiel links oder rechts in Bezug auf eine Verstellachse. Dies bringt einen größeren Freiheitsgrad bei der Montage mit sich.

In Figur 4B ist eine erste Position, in der das erste Befestigungsmittel 7 in einem mittleren Loch 10 befestigt ist dargestellt. Hier ergibt sich wie auch im Zusammenhang mit der Figur 4A erläutert ein Winkel β1 zwischen der Längsachse L und der Ebene E1 wie durch die gepunktete Linie dargestellt ist. Wird zum Beispiel die Befestigungsposition verändert, und das erste Befestigungsmittel 7 in einer Öffnung 10, die im Vergleich zur mittleren Öffnung links und unterhalb angeordnet ist, befestigt, so dreht sich die Längsachse L des Arms 4c um die Verstellachse A , wie durch die durchgehende Linie dargestellt ist, derart dass sich ein kleinerer Winkel β 2 zur Ebene E1 ergibt, und somit eine größere Höhe h, d.h. dass der Abstand des Trägers 5 zum Boden größer wird und somit auch die Zinkenenden eine höhere Position einnehmen können.

Eine Feineinstellung kann erfolgen durch Drehen der Exzentereinrichtung 9, während das erste und zweite Befestigungsmittel 7 und 8 miteinander verbunden sind und das Befestigungsmittel 7 am Halter befestigt ist. Figuren 6A und 6B zeigen das erste und zweite Befestigungsmittel 7, 8 in verbundenem Zustand, d. h., der Exzenterstift 23 ist durch die Exzenteröffnung 21 (Fig.8B) geführt und hier zum Beispiel festgeschraubt. Figur 7 zeigt eine erste Feineinstellposition des zweiten Befestigungsmittels 8. Dabei liegt zum Beispiel die Exzenteröffnung 21 in der Mitte des Langlochs 17, d. h., hat zum oberen und unteren Ende, d.h. zu den langen Seiten des Langlochs den gleichen Abstand. Es resultiert ein entsprechender Winkel β1 zwischen der Längsachse L des mittleren Armbereichs 4c und der horizontalen Ebene E1. Wird nun am Drehelement 15 gedreht, kann sich der Exzenter bzw. der Vorsprung 20 innerhalb des Langenlochs 17 kontinuierlich bewegen, derart, dass der Abstand der Exzenteröffnung 21 zur oberen Seite und unteren Seite des Langlochs variiert z.B. näher zur unteren Seite des Langlochs rückt. Dann verdreht sich das 2. Befestigungsmittel 8 nach oben, derart, dass der Winkel β1 kleiner wird.

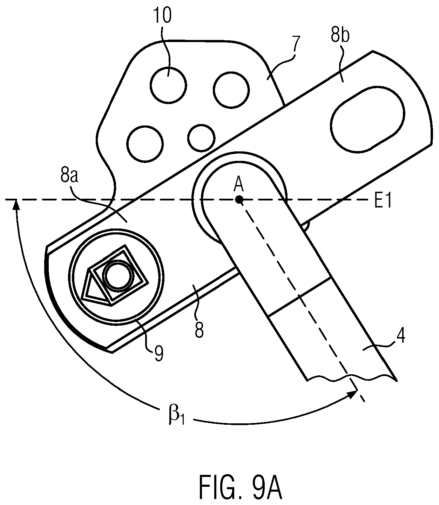

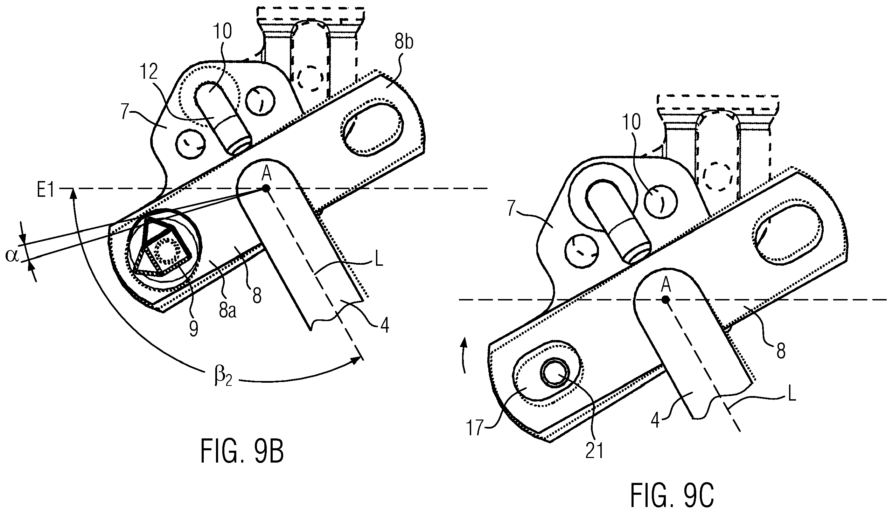

Figuren 9A, 9B, 9C zeigen dieses Prinzip in größeren Detail, wobei hier nur beispielhaft und wie im Zusammenhang mit Figur 4B erläutert wurde, sich das Befestigungsmittel 8 in Bezug zur Verstellungsachse A in beide Richtungen erstreckt.

Figur 9 A eigt eine erste Position der Exzentereinrichtung, 9 bei der die Exzenteröffnung 21 in der Mitte zwischen der oberen und unteren Seite des Langlochs 17 liegt und sich ein Winkel β1 zur Ebene E 1 und somit eine entsprechende Höhe h des Trägers 5 ergibt. Wird nun die Exzentereinrichtung 9 verdreht, wie aus den Figuren 9B und 9C hervorgeht, verschwenkt sich auch das zweite Befestigungsmittel 8 um einen Anstellwinkel α relativ zum ersten Befestigungsmittel, wobei wie insbesondere aus der Figur 9C hervorgeht sich jetzt die Exzenteröffnung näher an der unteren Seite des Langlochs befindet. Die verdrehte Position ist dabei mit durchgezogener Linie dargestellt und die Position gemäß Fig. 9A gepunktet. In Fig. 9C ist die Verstelleinrichtung 15 nicht dargestellt, dass Exzenteröffnung erkennbar ist.

Durch Drehen der Exzentereinrichtung 9 verändert sich der Anstellwinkel α des ersten Befestigungsmittels zum zweiten Befestigungsmittel kontinuierlich und dadurch der Drehwinkel des oberen Endbereich des Arms 4a um die Verstellachse A , der Winkel β2 zu einer Horizontalebene E1 und somit der Abstand h des Halters 5 zum Boden .Der Kraftfluss in der Befestigungseinrichtung erfolgt vom zweiten Befestigungsmittel 8 über die Exzentereinrichtung 9, den Stift 23, dem ersten Befestigungsmittel 7, dem Stift 12 und dem Halter 5.

Bei dem erfindungsgemäßen Verfahren zum Kompensieren von Fertigungstoleranzen erfolgt erst eine Grobeinstellung des Abstands des Halters 5 vom Boden durch Befestigung des ersten Befestigungsmittel 7 an einer bestimmten Position am Halter, indem wie aus Figur 4a hervorgeht, eine der Positionen, d. h., eine der Öffnungen 10 ausgewählt wird und der Stift bzw. Steckbolzen 12 durch die Öffnungen im ersten Befestigungsmittel 7 und im Halter 5 verschoben wird und schließlich fixiert wird. Wenn das erste Befestigungsmittel 7 an dem Halter 5 montiert wird, kann bereits das zweite Befestigungsmittel 8 am erste Befestigungsmittel 7 mittels Exzenter befestigt sein. Es ergibt sich in Abhängigkeit der gewählten Position , wie aus den Figuren 4A und B hervorgeht ein bestimmter Neigungswinkel β zu einer Ebene E1, die die Verstellachse A enthält, insbesondere horizontal Ebene. Das heißt, dass bei der Grobeinstellung in Abhängigkeit der Position, an der das erste Befestigungsmittel 7 am Halter 5 befestigt wurde, sich ein entsprechender Drehwinkel des ersten Befestigungsmittels relativ zum Halter 5 und dadurch ein entsprechender Drehwinkel des oberen Endbereichs des Arms um die Verstellachse A einstellt, so dass sich ein bestimmter Abstand h des Halters zum Boden ergibt. Entsprechendes wird für alle Zinkenkreisel 2 durchgeführt.

Nach dieser Grobeinstellung kann dann eine Feineinstellung erfolgen, um für jeden Zinkenkreisel separat Fertigungstoleranzen auszugleichen. Dabei wird durch Drehen der Exzentereinrichtung 9, wie aus dem Vergleich der Figuren 7A und 7B hervorgeht, der Anstellwinkel α des ersten Befestigungsmittels zum zweite Befestigungsmittel und dadurch der Drehwinkel des oberen Endbereichs des Arms 4A und die Verstellachse A verstellt, so dass sich der Abstand des Halters 5 zum Boden verändert.

Durch Drehen der Exzentereinrichtung am Drehelement 5 mittels Werkzeug kann der gewünschte Abstand des Halters zum Boden kontinuierlich verändert werden. Da die Befestigungseinrichtung nicht extra demontiert werden muss, kann genau erkannt werden, wann der jeweilige Zinkenkreisel korrekt eingestellt ist. Diese Feineinstellung kann beispielsweise einmalig vom Händler der Heuwerbungsmaschine durchgeführt werden, wonach die Maschine ausgeliefert werden kann. Die Fertigungstoleranzen können also kompensiert werden, während die Heuwerbungsmaschine auf ihren Rädern steht, und das erste Befestigungsmittel am Halter befestigt ist, und das erste mit dem zweiten Befestigungsmittel verbunden ist. Zur Feineinstellung muss der der Stift 12 oder der obere Armabschnitt 4A an der Rückseite des Trägers 5 nicht gelockert werden. Der Stift 12 verhindert eine Drehbewegung zwischen Träger 5 und erstem Befestigungsmittel 7. Bei der Feineinstellung kann sich der obere Endbereich des Arms 4a in den Öffnungen 25 im Träger und Öffnung 13 im ersten Befestigungsmittel drehen. Es kann vorteilhaft sein zur Feineinstellung die Schraube 23 leicht zu lösen. Sie dient nur zur Konterung des Exzenters. Nach Auslieferung kann dann der Landwirt in Abhängigkeit der Bodenbedingungen oder des Futters etc. eine entsprechende Grobeinstellung vornehmen. Eine weitere Feineinstellung ist dann nicht mehr notwendig.

## Patentansprüche

1. Heuwerbungsmaschine (1) umfassend:
mindestens einen Zinkenkreisel (2) mit einem jeweiligen Rad (24), das an einem unteren Endbereich (4b) eines Arms angeordnet ist, wobei
der obere Endbereich des Arms (4a) über eine Befestigungseinrichtung (6) an einem in Bezug auf den Boden höhenverstellbaren Halter (5) befestigt ist und die Befestigungseinrichtung (6)
ein erstes Befestigungsmittel (7), insbesondere eine Befestigungsplatte aufweist, das mit dem oberen Endbereich (4a) des Arms verbunden ist und an unterschiedlichen Positionen am Halter (5) befestigbar ist, wodurch der Abstand (h) des Halters zum Boden einstellbar ist **gekennzeichnet durch**
ein zweites Befestigungsmittel (8), das mit dem oberen Endbereich (4a) des Arms verbunden ist und das über eine Exzentereinrichtung (9) derart an dem ersten Befestigungsmittel (7) befestigt ist, dass im befestigten Zustand der beiden Befestigungsmittel durch Drehen der Exzentereinrichtung (9) der Abstand des Halters (5) zum Boden veränderbar ist.

2. Heuwerbungsmaschine nach Anspruch 1, **dadurch gekennzeichnet, dass**
sich eine Verstellachse (A) durch das obere Ende des Arms (4a) erstreckt,
das erste Befestigungsmittel (7) derart an den unterschiedlichen Positionen am Halter (5) befestigbar ist, dass der Drehwinkel des ersten Befestigungsmittels (7) relativ zum Halter (5) und dadurch der Drehwinkel des oberen Endbereichs des Arms (4a) um die Verstellachse (A) und somit der Abstand (h) des Halters (5) zum Boden veränderbar ist und/oder
das zweite Befestigungsmittel (8) über die Exzentereinrichtung (9) derart an dem ersten Befestigungsmittel (7) befestigt ist, dass im befestigten Zustand durch Drehen der Exzentereinrichtung (9) der Anstellwinkel (α) des ersten Befestigungsmittels zum zweiten Befestigungsmittel und dadurch der Drehwinkel des oberen Endbereichs des Arms (4a) um die Verstellachse A und somit der Abstand des Halters (5) zum Boden veränderbar ist.

3. Heuwerbungsmaschine (1) nach Anspruch 1 oder 2, **dadurch gekennzeichnet, dass** durch Drehen der Exzentereinrichtung (9) der Anstellwinkel des ersten Befestigungsmittels (7) zum zweiten Befestigungsmittel (8) kontinuierlich veränderbar ist.

4. Heuwerbungsmaschine (1) nach mindestens einem der Ansprüche 1-3, **dadurch gekennzeichnet, dass** das erste Befestigungsmittel (7) eine oder mehrere Öffnungen (10) aufweist, wobei ein Stift (12), insbesondere ein Steckbolzen durch eine Öffnung (10) durchgreift, um das erste Befestigungsmittel (7) an einer von mehreren Positionen am Halter (5) zu befestigen.

5. Heuwerbungsmaschine (1) nach Anspruch 4, **dadurch gekennzeichnet, dass** der Halter (5) ebenfalls eine oder mehrere entsprechende Öffnungen (11) aufweist, wobei der Steckbolzen (12) durch eine Öffnung im ersten Befestigungsmittel (7) und eine Öffnung (11) im Halter (5) durchgreift, wodurch das erste Befestigungsmittel (7) an einer von mehreren Positionen befestigt wird.

6. Heuwerbungsmaschine (1) nach einem der Ansprüche 1-5, **dadurch gekennzeichnet, dass** das erste und zweite Befestigungsmittel (7, 8) und der Halter (5) jeweils eine Durchgangsöffnung (13, 14, 25) aufweisen durch die der obere Endbereich (4a) des Arms greift, wobei vorzugsweise das zweite Befestigungsmittel (8) drehfest und unlösbar mit dem oberen Endbereich (4a) des Arms verbunden ist, insbesondere eingeschweißt ist.

7. Heuwerbungsmaschine (1) nach mindestens einen der Ansprüche 1-6, **dadurch gekennzeichnet, dass** die Exzentereinrichtung (9) ein von außen zugängliches Drehelement (15) aufweist, über das mittels Werkzeug die Exzentereinrichtung verdrehbar ist.

8. Heuwerbungsmaschine (1) nach Anspruch 7, **dadurch gekennzeichnet, dass** das erste und zweite Befestigungsmittel (7, 8) eine jeweilige Öffnung (16, 17) für die Exzentereinrichtung (9) aufweisen und einen Exzenterstift (23), insbesondere Bolzen und dass
die Exzentereinrichtung (9) ein Grundelement (19), mit einem Vorsprung (20) aufweist, der in einer der Öffnungen für die Exzentereinrichtung (16,17) im ersten oder zweiten Befestigungsmittel (8) eingesetzt ist, wobei
in dem Grundelement (19) und dem Vorsprung (20) eine Exzenteröffnung (21) angeordnet ist, durch die der Exzenterstift (23) geführt ist.

9. Heuwerbungsmaschine (1) nach mindestens einem der Ansprüche 1-8, **dadurch gekennzeichnet, dass** das zweite Befestigungsmittel (8) und erste Befestigungsmittel (7) parallel zueinander und jeweils senkrecht zur Verstellachse A, angeordnet sind.

10. Heuwerbungmaschine nach mindestens einem der Ansprüche 1-9, **dadurch gekennzeichnet, dass** das zweite Befestigungsmittel (7, 8) unlösbar mit dem oberen Endbereich (4a) des Arms verbunden, insbesondere angeschweißt ist.

11. Verfahren zum Kompensieren von Fertigungstoleranzen insbesondere für eine Heuwerbungsmaschine (1) nach mindestens einem der vorhergehenden Ansprüchen, wobei
die Heuwerbungsmaschine (1) mindestens einen Zinkenkreisel (2) mit einem jeweiligen Rad (24), das an einem unteren Endbereich (4b) eines Arms angeordnet ist, aufweist und der obere Endbereich (4a) des Arms über eine Befestigungseinrichtung (6) an einem in Bezug auf den Boden höhenverstellbaren Halter (5) befestigt ist mit folgenden Schritten:
Grobeinstellung des Abstands (h) des Halters (5) vom Boden durch Befestigen eines ersten Befestigungsmittels (7), das mit dem oberen Endbereich (4a) des Arm verbunden ist, an einer bestimmten Position am Halter (5) sowie
Feineinstellung mit Hilfe eines zweiten Befestigungsmittels, (8) das mit dem oberen Endbereich des Arms (4a) verbunden ist und das über eine Exzentereinrichtung (9) an dem ersten Befestigungsmittel befestigt ist, wobei durch Drehen der Exzentereinrichtung (9) der Abstand des Halters (5) zum Boden eingestellt wird.

12. Verfahren nach Anspruch 11, **dadurch gekennzeichnet, dass**
sich eine Verstellachse A durch den oberen Endbereich des Arms (4a) erstreckt,
bei der Grobeinstellung sich in Abhängigkeit der Position, an der das erste Befestigungsmittel (7) am Halter (5) befestigt wurde, ein entsprechender Drehwinkel des ersten Befestigungsmittels (7) relativ zum Halter (5) und dadurch ein entsprechender Drehwinkel des oberen Endbereichs des Arms (4a) um die Verstellachse A und somit der Abstand (h) des Halters (5) zum Boden einstellt, und/oder bei der
Feineinstellung durch Drehen der Exzentereinrichtung (9) der Anstellwinkel (α) des ersten Befestigungsmittels (7) zum zweiten Befestigungsmittel (8) und dadurch der Drehwinkel des oberen Endbereichs des Arms um die Verstellachse (A) und somit der Abstand des Halters (5) zum Boden eingestellt wird.

13. Verfahren nach Anspruch 11 oder 12 **dadurch gekennzeichnet, dass** die Heuwerbungsmaschine mehrere Zinkenkreisel (2) aufweist, und die Höhe der Halter (5) der Zinkenkreisel (2) aneinander durch Kompensieren der Fertigungstoleranzen durch die Feineinstellung angepasst wird, derart, dass die Zinken (3) der Kreisel gleichen Abstand (H) vom Boden haben.

14. Verfahren nach mindestens einem der Ansprüche 11-13, **dadurch gekennzeichnet, dass** die Fertigungstoleranzen kompensiert werden, während die Heuwerbungsmaschine (1) auf ihren Rädern steht und das erste Befestigungsmittel am Halter (5) befestigt ist und das erste mit dem zweiten Befestigungsmittel (8) verbunden ist.

15. Verfahren nach mindestens einem der Ansprüche 11-14 **dadurch gekennzeichnet, dass** nach der Feineinstellung der Abstand des Halters (5) zum Boden durch eine weitere Grobeinstellung eingestellt wird.

16. Verfahren nach mindestens einem der Ansprüche 11-15, **dadurch gekennzeichnet, dass** zur Feineinstellung die Exzentereinrichtung (9) so lange kontinuierlich gedreht wird, bis der Halter (5) und somit das Rad (24) eine bestimmte Position aufweisen.

17. Heuwerbungsmaschine nach Anspruch 8, **dadurch gekennzeichnet, dass** das zweite Befestigungsmittel (8) zwei Flügel aufweist, die sich in Bezug auf die Verstellachse A in zwei Richtungen senkrecht nach außen erstrecken und in jedem Flügel eine Öffnung für die Exzentereinrichtung vorgesehen ist, insbesondere ein Langloch.

## Claims

1. A haymaking machine (1) comprising:
at least one tine rotor (2) with a respective wheel (24) arranged at a lower end region (4b) of an arm, wherein
the upper end region of the arm (4a) is fastened via a fastening device (6) to a holder (5) that is height-adjustable relative to the ground, and the fastening device (6) has
a first fastening means (7), in particular a fastening plate, which is connected to the upper end region (4a) of the arm and can be fastened to the holder (5) at different positions, whereby the distance (h) between the holder and the ground is adjustable, **characterized by**
a second fastening means (8) connected to the upper end region (4a) of the arm and fastened to the first fastening means (7) via an eccentric device (9) such that, when the two fastening means are fastened together, the distance between the holder (5) and the ground can be varied by rotating the eccentric device (9).

2. The haymaking machine according to claim 1, **characterized in that**
an adjustment axle (A) extends through the upper end of the arm (4a),
the first fastening means (7) can be fastened to the holder (5) at the different positions in such a way that the angle of rotation of the first fastening means (7) relative to the holder (5) and thereby the angle of rotation of the upper end region of the arm (4a) about the adjustment axle (A) and thus the distance (h) between the holder (5) and the ground can be varied, and/or
the second fastening means (8) is fastened to the first fastening means (7) via the eccentric device (9) in such a way that, in the fastened state, rotating the eccentric device (9) allows the angle of inclination (α) between the first fastening means and the second fastening means and thereby the angle of rotation of the upper end region of the arm (4a) about the adjustment axle A, and thus the distance between the holder (5) and the ground, to be varied.

3. The haymaking machine (1) according to claim 1 or 2, **characterized in that** the angle of inclination of the first fastening means (7) relative to the second fastening means (8) can be continuously varied by rotating the eccentric device (9).

4. The haymaking machine (1) according to at least one of claims 1-3, **characterized in that** the first fastening means (7) has one or more openings (10), wherein a pin (12), in particular a lock pin, passes through an opening (10) in order to fasten the first fastening means (7) to the holder (5) at one of several positions.

5. The haymaking machine (1) according to claim 4, **characterized in that** the holder (5) also has one or more corresponding openings (11), wherein the lock pin(12) passes through an opening in the first fastening means (7) and an opening (11) in the holder (5), whereby the first fastening means (7) is fastened at one of several positions.

6. The haymaking machine (1) according to one of claims 1-5, **characterized in that** the first and second fastening means (7, 8) and the holder (5) each have a through-opening (13, 14, 25) through which the upper end region (4a) of the arm passes, wherein, preferably, the second fastening means (8) is connected to the upper end region (4a) of the arm in a rotationally fixed and permanent manner, in particular by welding.

7. The haymaking machine (1) according to at least one of claims 1-6, **characterized in that** the eccentric device (9) has a rotatable element (15) accessible from the outside, by means of which the eccentric device can be rotated using a tool.

8. The haymaking machine (1) according to claim 7, **characterized in that** the first and second fastening means (7, 8) have a respective opening (16, 17) for the eccentric device (9) and an eccentric pin (23), in particular a bolt **and that**
the eccentric device (9) has a base element (19) with a projection (20) which is inserted into one of the openings for the eccentric device (16, 17) in the first or second fastening means (8), wherein
in the base element (19) and the projection (20), an eccentric opening (21) is arranged, through which the eccentric pin (23) is guided.

9. The haymaking machine (1) according to at least one of claims 1-8, **characterized in that** the second fastening means (8) and the first fastening means (7) are arranged parallel to each other and perpendicular to the adjustment axle A, respectively.

10. The haymaking machine according to at least one of claims 1-9, **characterized in that** the second fastening means (7, 8) is permanently attached to the upper end region (4a) of the arm, in particular by welding.

11. A method for compensating for manufacturing tolerances, in particular for a haymaking machine (1) according to at least one of the preceding claims, wherein
the haymaking machine (1) has at least one tine rotor (2) with a respective wheel (24) arranged at a lower end region (4b) of an arm, and the upper end region (4a) of the arm is fastened via a fastening device (6) to a holder (5) that is height-adjustable relative to the ground, comprising the following steps:
rough adjustment of the distance (h) between the holder (5) and the ground by fastening a first fastening means (7), which is connected to the upper end region (4a) of the arm, at a specific position on the holder (5), as well as
fine adjustment by means of a second fastening means (8), which is connected to the upper end region (4a) of the arm and fastened to the first fastening means (7) via an eccentric device (9), wherein the distance between the holder (5) and the ground is adjusted by rotating the eccentric device (9).

12. The method according to claim 11, **characterized in that**
an adjustment axle (A) extends through the upper end region of the arm (4a),
during rough adjustment, depending on the position at which the first fastening means (7) was fastened to the holder (5), a corresponding angle of rotation of the first fastening means (7) relative to the holder (5), and thereby a corresponding angle of rotation of the upper end region of the arm (4a) about the adjustment axle A, and thus the distance (h) between the holder (5) and the ground, is adjusted, and/or during the
fine adjustment by rotating the eccentric device (9) the angle of rotation (α) of the first fastening means (7) relative to the second fastening means (8), and thereby the angle of rotation of the upper end region of the arm about the adjustment axle (A), and thus the distance between the holder (5) and the ground, is adjusted.

13. The method according to claim 11 or 12 **characterized in that** that the haymaking machine comprises several tine rotors (2), and the height of the holder (5) for the tine rotors (2) is adjusted relative to one another by fine-adjustment to compensate for manufacturing tolerances, such that the tines (3) of the rotors are at the same distance (H) from the ground.

14. The method according to at least one of claims 11-13, **characterized in that** the manufacturing tolerances are compensated while the haymaking machine (1) is standing on its wheels, the first fastening means is attached to the holder (5), and the first fastening means is connected to the second fastening means (8).

15. The method according to at least one of claims 11-14 **characterized in that,** after fine adjustment, the distance between the holder (5) and the ground is adjusted by means of a further rough adjustment.

16. The method according to at least one of claims 11-15, **characterized in that,** for fine adjustment, the eccentric device (9) is rotated continuously until the holder (5) and thus the wheel (24) have a specific position.

17. The haymaking machine according to claim 8, **characterized in that** the second fastening means (8) has two wings that extend perpendicularly outward in two directions relative to the adjustment axle A, and an opening for the eccentric device, in particular an elongated hole, is provided in each wing.

## Revendications

1. Machine de fenaison (1) comprenant :
au moins un rotor à dents (2) avec une roue respective (24) agencée dans la portion terminale inférieure (4b) d'un bras, dans laquelle
la portion terminale supérieure (4a) du bras est fixée via un dispositif de fixation (6) à un support (5) réglable en hauteur par rapport au sol, et le dispositif de fixation (6) comporte un premier moyen de fixation (7), en particulier une plaque de fixation, qui est connecté à la portion terminale supérieure (4a) du bras et peut être fixé à différentes positions sur le support (5), moyennant quoi la distance (h) du support peut être réglée par rapport au sol,
**caractérisée par**
un deuxième moyen de fixation (8) qui est connecté à la portion terminale supérieure (4a) du bras et est fixé au premier moyen de fixation (7) via un dispositif excentrique (9) de telle sorte que, dans l'état fixé des deux moyens de fixation, la distance du support (5) au sol puisse être modifiée en faisant tourner le dispositif excentrique (9).

2. Machine de fenaison selon la revendication 1,
**caractérisée en ce que**
un axe de réglage A s'étend à travers la portion terminale supérieure (4a) du bras,
le premier moyen de fixation (7) peut être fixé au support (5) dans différentes positions de manière à pouvoir modifier l'angle de rotation du premier moyen de fixation (7) par rapport au support (5), et à pouvoir modifier ainsi l'angle de rotation de la portion terminale supérieure (4a) du bras autour de l'axe de réglage A, et par conséquent la distance (h) du support (5) au sol, et/ou
le deuxième moyen de fixation (8) est fixé au premier moyen de fixation (7) via le dispositif excentrique (9) de manière à pouvoir modifier, à l'état fixé, l'angle d'attaque (α) entre le premier moyen de fixation et le deuxième moyen de fixation en faisant tourner le dispositif excentrique (9), et à pouvoir modifier ainsi l'angle de rotation de la portion terminale supérieure (4a) du bras autour de l'axe de réglage A, et par conséquent la distance du support (5) au sol.

3. Machine de fenaison (1) selon la revendication 1 ou 2, **caractérisée en ce que** l'angle d'attaque du premier moyen de fixation (7) par rapport au deuxième moyen de fixation (8) peut être modifié en continu en faisant tourner le dispositif excentrique (9).

4. Machine de fenaison (1) selon au moins l'une des revendications 1 à 3, **caractérisée en ce que** le premier moyen de fixation (7) comporte une ou plusieurs ouvertures (10), dans laquelle un goujon (12), en particulier une broche, traverse une ouverture (10) pour fixer le premier moyen de fixation (7) dans une position parmi plusieurs positions sur le support (5).

5. Machine de fenaison (1) selon la revendication 4,
**caractérisée en ce que** le support (5) comporte également une ou plusieurs ouvertures (11) correspondantes, dans laquelle la broche (12) traverse une ouverture dans le premier moyen de fixation (7) et une ouverture (11) dans le support (5), moyennant quoi le premier moyen de fixation (7) est fixé dans une position parmi plusieurs positions.

6. Machine de fenaison (1) selon l'une des revendications 1 à 5, **caractérisée en ce que** les premier et deuxième moyens de fixation (7, 8) et le support (5) comportent chacun une ouverture traversante (13, 14, 25) à travers laquelle s'engage la portion terminale supérieure (4a) du bras, dans laquelle le deuxième moyen de fixation (8) est de préférence connecté de manière bloquée en rotation et indissociable à la portion terminale supérieure (4a) du bras, en particulier par soudage.

7. Machine de fenaison (1) selon au moins l'une des revendications 1 à 6, **caractérisée en ce que** le dispositif excentrique (9) comporte un élément rotatif (15) accessible depuis l'extérieur au moyen duquel le dispositif excentrique peut être tourné à l'aide d'un outil.

8. Machine de fenaison (1) selon la revendication 7,
**caractérisée en ce que**
les premier et deuxième moyens de fixation (7, 8) comportent chacun une ouverture (16, 17) pour le dispositif excentrique (9) et un goujon excentrique (23), en particulier une broche, et
le dispositif excentrique (9) comporte un élément de base (19) pourvu d'une protubérance (20) qui s'insère dans l'une des ouvertures prévues pour le dispositif excentrique (16, 17) dans le premier ou le deuxième moyen de fixation (8),
dans laquelle une ouverture excentrique (21) est agencée dans l'élément de base (19) et la protubérance (20), à travers laquelle est guidé le goujon excentrique (23).

9. Machine de fenaison (1) selon au moins l'une des revendications 1 à 8, **caractérisée en ce que** le deuxième moyen de fixation (8) et le premier moyen de fixation (7) sont agencés parallèlement l'un à l'autre et perpendiculairement à l'axe de réglage A.

10. Machine de fenaison selon au moins l'une des revendications 1 à 9, **caractérisée en ce que** le deuxième moyen de fixation (7, 8) est connecté de manière indissociable à la portion terminale supérieure (4a) du bras, en particulier par soudage.

11. Procédé de compensation des tolérances de fabrication, en particulier pour une machine de fenaison (1) selon au moins l'une des revendications précédentes, dans lequel la machine de fenaison (1) comporte au moins un rotor à dents (2) avec une roue respective (24) agencée à la portion terminale inférieure (4b) d'un bras, et la portion terminale supérieure (4a) du bras est fixée via un dispositif de fixation (6) à un support (5) réglable en hauteur par rapport au sol selon les étapes suivantes :
réglage grossier de la distance (h) du support (5) au sol en fixant un premier moyen de fixation (7) connecté à la portion terminale supérieure (4a) du bras à une position déterminée sur le support (5), et
réglage fin à l'aide d'un deuxième moyen de fixation (8) qui est connecté à la portion terminale supérieure (4a) du bras et fixé au premier moyen de fixation via un dispositif excentrique (9), dans lequel la distance du support (5) au sol est réglée en faisant tourner le dispositif excentrique (9).

12. Procédé selon la revendication 11, **caractérisé en ce que**
un axe de réglage A s'étend à travers la portion terminale supérieure (4a) du bras,
lors du réglage grossier, en fonction de la position à laquelle le premier moyen de fixation (7) a été fixé au support (5), un angle de rotation correspondant du premier moyen de fixation (7) par rapport au support (5) est réglé, et règle ainsi un angle de rotation correspondant de la portion terminale supérieure (4a) du bras autour de l'axe de réglage A, et par conséquent la distance (h) du support (5) au sol, et/ou
lors du réglage fin, l'angle d'attaque (α) du premier moyen de fixation (7) par rapport au deuxième moyen de fixation (8) est réglé en faisant tourner le dispositif excentrique (9), moyennant quoi l'angle de rotation de la portion terminale supérieure du bras autour de l'axe de réglage A est réglé, et par conséquent aussi la distance du support (5) au sol.

13. Procédé selon la revendication 11 ou 12, **caractérisé en ce que** la machine de fenaison comporte plusieurs rotors à dents (2), et **en ce que** la hauteur des supports (5) des rotors à dents (2) est ajustée en compensant respectivement les tolérances de fabrication à l'aide du réglage fin de sorte que les dents (3) des rotors soient à la même distance (H) du sol.

14. Procédé selon au moins l'une des revendications 11 à 13, **caractérisé en ce que** les tolérances de fabrication sont compensées alors que la machine de fenaison (1) est posée sur ses roues, que le premier moyen de fixation est attaché au support (5), et que le premier moyen de fixation est connecté au deuxième moyen de fixation (8).

15. Procédé selon au moins l'une des revendications 11 à 14, **caractérisé en ce que,** après le réglage fin, la distance du support (5) au sol est réglée par un réglage grossier supplémentaire.

16. Procédé selon au moins l'une des revendications 11 à 15, **caractérisé en ce que,** pour le réglage fin, le dispositif excentrique (9) est continuellement tourné jusqu'à ce que le support (5), et par conséquent la roue (24), soient dans une position déterminée.

17. Machine de fenaison selon la revendication 8,
**caractérisée en ce que** le deuxième moyen de fixation (8) comporte deux ailes qui s'étendent perpendiculairement vers l'extérieur dans deux directions par rapport à l'axe de réglage A, et **en ce que** chaque aile est pourvue d'une ouverture pour le dispositif excentrique, et en particulier d'un trou oblong.
